# EUROPEAN PATENT SPECIFICATION

(11) **EP 1 785 913 B1**
(45) Date of publication and mention of the grant of the patent: **08.05.2019**
(21) Application number: 06076690.4
(22) Date of filing: 07.09.2006
(51) Int. Cl.: A47B 96/02, G06K 17/00, A47F 3/00, H01Q 1/22, G06K 7/10

(54) **Smart shelf system**
Intelligentes Regalsystem
Petit système d'étagères

(30) Priority: 07.09.2005 NL 1029902; 27.03.2006 NL 1031446
(43) Date of publication of application: 16.05.2007
(73) Proprietor: N.V. Nederlandsche Apparatenfabriek NEDAP, 7141 DC Groenlo (NL)
(72) Inventor: Beyers, Rudi, 7102 EX Winterswijk (NL)
(74) Representative: V.O.

(56) References cited:
- US-A1- 2003 132 835
- US-B1- 6 595 418

## Description

The invention relates to a shelf system provided with at least one shelf which is arranged for accommodating articles such as books, packages, for instance with medicines, and/or videotapes, wherein the system is further provided with at least one label detection system provided with an antenna system provided with coils for reading out identification labels which are operatively connected with the articles, wherein the antenna system is provided with at least one transmitting and receiving antenna for transmitting an electromagnetic interrogation field and receiving responses from the identification labels present in the interrogation field.

A shelf system with label detection is, for instance, known from American patent application US 2003/132835. Per shelf, the known system comprises two receiving antennas placed on both sides of the shelf and a transmitting antenna placed above the articles. For reading out an identification label, an electromagnetic interrogation field is generated with the aid of the transmitting antenna, and a response of the identification labels is detected with the aid of the receiving antennas.

The known system has *inter alia* the drawback that it is not or hardly adjustable to specific dimensions of shelves, is difficult to install and/or is not or hardly adjustable if a dimension of a shelf is changed. In addition, the known system has the drawback that a separate transmitting antenna and receiving antennas are needed, which, for instance, makes the system expensive.

US 6,595,418 B1 discloses a shelf system according to the preamble of claim 1, including an exit monitoring device, a storage shelf unit and non-contact id tags. The system comprises a non-contact id tag detection device for detecting the presence of the non-contact id tags. Thereto, the non-contact id tag detection device includes plurality of transmitting and receiving antennas, each consisting of a single loop antenna.

The invention contemplates providing a shelf system which can improve the known systems in various manners. The invention relates to a shelf system according to claim 1 and a label detection system according to claim 26.

Thus, the transmitting and receiving antenna provides a detection zone in which an identification label can be detected between each two neighboring surfaces. Since the coils substantially extend in a surface transverse to the longitudinal direction of the shelf, the coils can simply be placed between the articles and can optionally serve as a support for the articles or sidewall of a section in which the articles have been placed. In addition, thus, the position of the coils in the longitudinal direction of the shelf can be chosen and/or adjusted suitably, for instance in order to match a dimension of the shelf in the longitudinal direction of the shelf.

Preferably, per shelf, the antenna system is provided with at most one transmitting and receiving antenna. Thus, a very simple antenna system of the detection system is provided.

Preferably, the plurality of coils of the transmitting and receiving antenna is provided in at least three surfaces offset in the longitudinal direction of the shelf and relative to one another. Thus, it is possible to place the coils of the transmitting and receiving antenna closer together in the longitudinal direction of the shelf than if the coils extend in fewer surfaces. Thus, an interrogation field with a smaller intensity and/or amplitude is sufficient.

Preferably, the transmitting and receiving antenna is provided with a coil per surface. Thus, the transmitting and receiving antenna can be designed very simply.

According to the invention, the plurality of coils is electrically conductively interconnected by means of connecting wires. Thus, the coils of each surface can simply be interconnected, for instance in series, to form the transmitting and receiving antenna. The connecting wires may then extend between the surfaces substantially in the longitudinal direction of the shelf. The connecting wires may also extend next to, for instance behind or below, the shelf, so that the connecting wires can be concealed and/or hidden from view in a simple manner.

In one embodiment, the shelf system further comprises at least one article provided with at least one identification label, wherein the identification label has been placed substantially parallel to the coils of the at least one transmitting and receiving antenna. Thus, a good coupling of the interrogation field into the label and a good reception of a signal generated by the label is realized. This can, for instance, be realized well with articles which substantially always have a fixed orientation relative to the coils, such as books in a shelf in a library.

The system can ascertain which identification labels are present in at least one predetermined detection zone in which the transmitting and receiving antenna transmits the interrogation field. This provides the possibility to ascertain, if desired, which articles are present in the at least one predetermined detection zone. This in turn *inter alia* provides the possibility to indicate whether there are articles in at least one predetermined detection zone which do not belong there, to ascertain whether a particular article is present or in stock or whether an article is absent in that a particular article is not in one of the predetermined detection zones, to determine that an article is (again) present because the user places the article in the predetermined detection zone, to point out to the user that he places an article in a wrong predetermined detection zone, to take stock of which articles are where or which articles, if any, are in the wrong place and which articles have been distributed/delivered/sold, etc. The system may further be arranged such that large quantities of articles which newly arrive with the user can directly be placed in the shelves. Thus, it is possible that, upon arrival with the user, the articles are each already provided with an identification label comprising information about the respective article. By placing the articles in the shelves, the identification labels are detected and the system knows which articles have been provided in which predetermined detection zones. As a result, the system is directly up to date. It is also possible that, upon arrival, the articles are each provided with an identification label comprising an identification code. The articles can then be placed directly in the shelves. The system then determines the identification codes of the articles placed in the shelves. Then the system can automatically retrieve information of an article associated with a particular identification code, for instance via the Internet, for instance directly from the supplier of the articles. Thus, the system knows which articles have newly been placed in the shelves. When the system is provided with a plurality of detection zones, the system also knows in which detection zones which new articles have been placed. In short, thanks to the invention, managing a shelf system can be improved and simplified in many respects, such as with distributing, placing and/or sorting articles and with entering new articles into the system. In particular, it holds that the at least one detection zone coincides with the at least one shelf. More in particular, it holds that each shelf is completely covered by at least one of the detection zones. Thus, one is always able to ascertain whether an article is within the shelf system and if so, in which shelf.

In a practical embodiment of the invention, it holds that the shelf system is provided with at least one cabinet comprising a plurality of the shelves.

Preferably, the coils are connected with the shelf and/or the cabinet. Thus, the coils can generate the interrogation field in the shelf and are securely provided on the shelf or in the cabinet.

Preferably, it further holds that the shelf system is provided with a plurality of cabinets.

According to an economically advantageous embodiment of the shelf system according to the invention, it holds that the label detection system is provided with at least one transmitting and receiving apparatus and a plurality of the transmitting and receiving antennas, wherein the label detection system is further provided with at least one multiplexer for successively connecting different transmitting and receiving antennas with the at least one transmitting and receiving apparatus for successively, for a plurality of detection zones, per detection zone, detecting identification labels present in the respective zone. Thus, with the aid of the at least one transmitting and receiving apparatus, for a plurality of detection zones, per detection zone, identification labels can be detected. Thus, the system can have a relatively economically advantageous design. According to a first further variant, it holds that the at least one transmitting and receiving apparatus is provided with a transmitter and a receiver, while the transmitter and/or the receiver is successively connected with different transmitting and receiving antennas via the multiplexer. In this variant, for instance, with the transmitter, an electromagnetic interrogation field can be generated in a plurality of the detection zones. With the receiver, via the multiplexer, it can then be ascertained per detection zone which identification labels are in the respective zone. In an alternative embodiment, both the generation of the electromagnetic interrogation field and the reception of a response from a label present in the interrogation field are carried out per detection zone with the aid of the multiplexer.

In particular, it holds that the shelf system is further provided with a control device which is connected with the label detection system. The control device can control the label detection system such that the above-described possibilities for distributing, placing, sorting, taking stock, etc. are carried out.

In particular, it then holds that the control device is provided with at least one information output unit such as a display for operatively outputting information about the articles present and/or missing in the at least one shelf. Here, it may the case that, per cabinet, the control device is provided with an information output unit for operatively outputting information about the articles present and/or missing in the cabinet.

According to an advanced embodiment, it also holds that the control device is further provided with input means for inputting identity information of for instance a person, organization or company, wherein the control device is arranged for, after identity information has been inputted, coupling information about a label or article which is taken from the shelf or put in the shelf to the identity information and storing coupling information of the intercoupled identity information and information about the article or label. A user can thus go to a cabinet and identify himself there so that the system knows, when an article is then taken from the cabinet, which user does this. It is also possible for the user not to input his own identity, but, for instance, the identity of a buyer of the article, for instance with order picking. Therefore, the system is preferably provided with above-mentioned input means per cabinet. These input means may, for instance, consist of a card reader for reading an identification card or a barcode reader.

In particular, it further holds that the coil(s) of the transmitting and receiving antennas extending in a surface is (are) designed as an insert module which is arranged for being placed in a shelf. By standardizing the insert modules, each shelf can simply be included in a shelf system according to the present invention. In addition, the invention relates to a label detection system arranged for being used in a shelf system according to the invention.

The invention will now be explained in more detail with reference to the drawing, in which:
Fig. 1 shows a possible embodiment of a shelf system according to the invention;
Fig. 2 shows a possible embodiment of an antenna module of the system of Fig. 1; and
Fig. 3 shows an alternative possible embodiment of a system according to the invention.

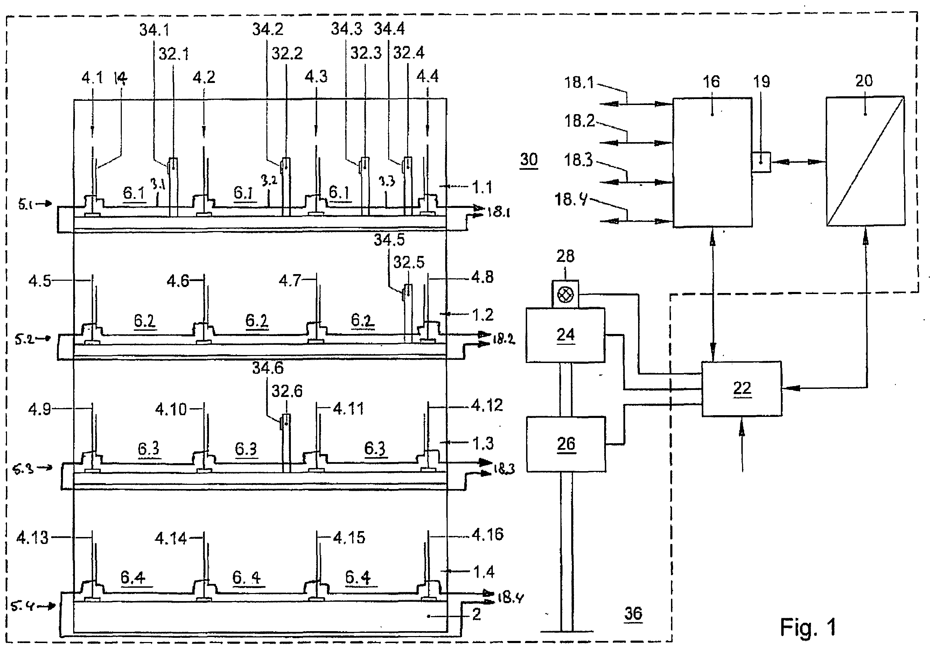

The shelf system of Fig. 1 is provided with at least one shelf 1.1 which is arranged for accommodating articles such as books, packages, for instance with medicines, and videotapes. In this example, the shelf system is provided with a cabinet 2 which is provided with four such shelves 1.1, 1.2, 1.3 and 1.4.

In this example, in the shelf 1.1, four antenna modules 4.1, 4.2, 4.3 and 4.4 have been placed. Completely analogously, in the shelf 1.2, four antenna modules 4.1-4.8, in the shelf 1.3, four antenna modules 4.9-4.12 and, in the shelf 1.4, four antenna modules 4.13-4.16 have been placed.

Between the antenna modules 4.1, 4.2, 4.3 and 4.4, in this example, a predetermined detection zone 6.1 is formed. Between the antenna modules 4.5, 4.6, 4.7 and 4.8, a predetermined detection zone 6.2 is formed. Between the antenna modules 4.9, 4.10, 4.11 and 4.12, a predetermined detection zone 6.3 is formed. Between the antenna modules 4.13, 4.14, 4.15 and 4.16, a predetermined detection zone 6.4 is formed.

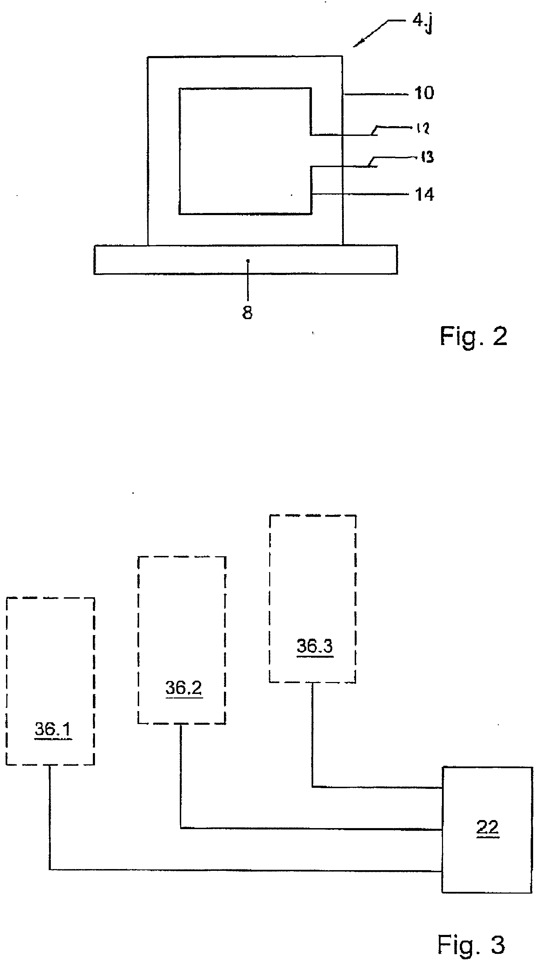

Fig. 2 shows a side elevational view of a possible embodiment of an antenna module 4.j (j=1,2,...12). The antenna module 4.j is provided with a horizontal base 8 and an upright wall connected thereto which is, in this example, substantially transparent to the electromagnetic interrogation field. In this example, substantially parallel to the wall 10, a loop antenna 14 known per se is placed. It will be clear that the antenna modules bounding the shelf, such as the antenna modules 4.1 and 4.4, may also be provided with an upright wall which is not transparent to the interrogation field. Thus, the interrogation field can substantially be limited to the shelf, so that identification labels not present on the shelf are not detected. In this example, each loop antenna 14 comprises at least one coil, for instance one coil. In the example of Fig. 2, the coils of the loop antenna extend substantially in a flat surface.

The at least one coil of the loop antenna 14 comprises a first end 12 and a second end 13. In the example of Fig. 1, the ends 12, 13 of the coils of the antenna modules 4.1-4.4 are electrically conductively interconnected by means of connecting wires 3.1, 3.2 and 3.3. That is to say, the second end 13 of the antenna module 4.1 is connected with the first end 12 of the antenna module 4.2, the second end 13 of the antenna module 4.2 is connected with the first end 12 of the antenna module 4.3 and the second end 13 of the antenna module 4.3 is connected with the first end 12 of the antenna module 4.4. Here, in this example, the series-connected coils of the antenna modules 4.1-4.2 together form the transmitting and receiving antenna 5.1. The transmitting and receiving antenna 5.1. thus comprises a plurality of coils which are provided at least substantially in a plurality of surfaces. In the example of Fig. 1, each surface of the antenna modules in which a coil extends has a normal which is at least virtually directed in a longitudinal direction of the shelf. The surfaces are further provided so as to be offset relative to one another in the longitudinal direction of the shelf. Between the surfaces offset in the longitudinal direction, the detection zone extends, as described hereinabove.

In this example, the connecting wires 3.1-3.3 extend between the surfaces, i.e. between the antenna modules 4.1-4.4, substantially in the longitudinal direction of the shelf 1.1. The connecting wires 3.1-3.3 may then extend next to the shelf 1.1, for instance along a front side or back side of the shelf, or along an top side or bottom side of the shelf. It is also possible for the connecting wires to extend along a bottom side of a higher shelf. In a special embodiment, the connecting wires extend along a back side, for instance behind a back wall, of the cabinet.

In this example, it holds that the antenna modules are designed as insert modules which are each arranged for being placed in a shelf. By standardizing the insert modules, each shelf can be simply included in a shelf system according to the present invention. Thus, for instance, for a long shelf, a larger number of antenna modules can be used in the transmitting and receiving antenna than for a shorter shelf. Here, the antenna modules may, for instance, be provided with connecting clamps which are conductively connected with the first end 12 and the second end 13 of the at least one coil of the antenna module, for connecting the connecting wires therewith.

It will be clear that an assembly of two antenna modules which are kept at a predetermined distance by a connecting part for forming a detection zone between the antenna modules may also be designed as an insert module.

Further, it is possible that an assembly of a plurality of antenna modules and connecting parts for forming a plurality of detection zones, which together preferably cover the whole shelf, is designed as an insert module. Thus, for instance, the transmitting and receiving antenna can in its entirety be designed as an insert module. This offers the advantage that a cabinet provided with shelves can quickly and efficiently be provided with the shelf system in a modular manner.

On the other hand, it is also possible for the transmitting and receiving antenna to be integrated in the shelf and/or in the cabinet. This offers the advantage that the transmitting and receiving antenna is insusceptible to damage and/or can esthetically adequately be concealed in the shelf and/or the cabinet.

The transmitting and receiving antennas 5.i are connected with a multiplexer 16. In this example, the multiplexer 16 comprises connections 18.i (i=1,2,3,...) on the one side. It holds that the connection 18.i is connected with the transmitting and receiving antennas 5.i. On the other side, a connection 19 of the multiplexer 16 is connected with a transmitting and receiving apparatus 20. The multiplexer 16 and the receiving apparatus 20 are further connected with a control device 22. The control device 22 is connected with an information output unit 24 which, in this example, has the form of a display. Further, the control device 22 is connected with input means 26 which, in this example, have the form of card readers. Finally, the control device 22 is connected with a voice system 28. In this example, the transmitting and receiving antennas 5.i, the transmitting and receiving apparatus 20, the multiplexer 16 together form a label detection system 30 for reading out identification labels. The operation of the shelf system is as follows.

In use, the number of articles 32.y (in this example, y=1,2,...,6) are placed in the cabinet 2. In this example, each article 32.y is provided with an identification label 34.y (y=1,2,...,6). All this is schematically shown in Fig. 1. The identification label is an RFID label known per se which responds when it is introduced into an electromagnetic interrogation field. This may, for instance, be a label which responds to an electromagnetic field having a frequency of 13.56 MHz. However, other frequencies are also possible.

In the example of Fig. 1, the plurality of coils of the transmitting and receiving antenna 5.1 is provided in at least three, namely four surfaces offset relative to one another and in the longitudinal direction of the shelf. Here, each surface is formed by a surface in which the loop antenna 14 of the antenna module 4.1-4.4 extends. In this example, the antenna modules 4.1-4.4 may also be used as section dividers, for dividing the shelf into sections, for instance for placing different articles 32.y therein. In addition, using at least three antenna modules on one shelf has the advantage that a maximum distance between an identification label 34.y and a closest antenna module is decreased, so that a smaller interrogation field (i.e. an interrogation field having less energy, for instance having a smaller amplitude) is sufficient.

In this example, the electromagnetic interrogation field is generated with the aid of the transmitting and receiving apparatus 20. The control device 22 controls the multiplexer 16 such that the transmitting and receiving apparatus 20 is successively connected with the connections 18.1 - 18.4. If the transmitting and receiving apparatus 20 is connected with the connection 18.1 via the multiplexer 16, this means that the apparatus is connected with the transmitting and receiving antenna 5.1, i.e. with the coils forming the loop antennas 14 of the antenna modules 4.1-4.4. The result is that, with the aid of the loop antennas, an electromagnetic interrogation field is generated in the detection zone 6.1, which is bounded by the antenna modules 4.1-4.4 of the transmitting and receiving antenna 5.1. The coils of the antenna modules 4.1-4.4 of the transmitting and receiving antenna 5.1. are, in this example, on or (just) above the shelf, so that the coils can generate the interrogation field in the detection zone 6.1 on the shelf 1.1, so that the identification labels of the articles present in the detection zone 6.1 are exposed to the interrogation field. The result is that the identification labels present in the detection zone 6.1 will respond to the electromagnetic interrogation field. The transmitting and receiving apparatus can thus read out the labels present in the detection zone 6.1. In this example, the identification label 34.1-34.4 of the articles 32.1-32.4, respectively, will be read out. The other identification label 34.5-34.6 present in the cabinet will not respond because the electromagnetic interrogation field is only generated in the detection 6.1 on the shelf 1.1.

In this example, each identification label 34.y comprises an identification code and this code is read out with the aid of the transmitting and receiving apparatus 20 in order to then be fed to the control device 22. Shortly afterwards, the control device 22 controls the multiplexer 16 such that the transmitting and receiving apparatus 20 is connected with the connection 18.2 via the multiplexer 16. The result is then that, with the aid of loop antennas 14 of the antenna modules 4.5-4.8 of the transmitting and receiving antenna 5.2, an electromagnetic interrogation field is generated in the detection zone 6.2 on the shelf 1.2. This means that, in this example, the identification label 34.5 of the article 32.5 will respond. Thus, the system determines that the identification label 34.5 is present in the detection zone 6.2. The read-out identification code of the identification label 34.5 is also fed to the control device 22. Completely analogously, then, with the aid of the transmitting and receiving antenna 5.3 in the detection zone 6.3, the identification codes of the identification label 34.6 are read out and fed to the control device 22. When the transmitting and receiving apparatus 20 is, for instance, connected with the transmitting and receiving antenna 5.4, which is associated with the detection zone 6.4, no identification labels will be read out because the detection zone 6.4 is empty in this example.

Thus, successively, all detection zones 6.1-6.4 are scanned to determine which identification labels are present in the respective zones. The control device 22 thus knows which identification labels are present in which zones. This may, for instance, be stored in a memory of the control device 22 (for instance a PC).

In this example, the control device further comprises, per identification label 34.y, information about an article to which that label is attached. If the article is a book, this information may, for instance, be the name of the book and the author. When the article is a package with medicines, this information may, for instance, be the name of the medicine and the amount of medicine in the package.

In this example, the control device 22 is arranged such that it indicates on the display 24 which articles (name of medicine, name of book, etc.) are present in which detection zone of the cabinet. This may be made knowable in various manners. Thus, all this can be presented in a list in which, on the one hand, a number of a detection zone is shown which is, for instance, also provided on the cabinet and, on the other hand, a list of names of articles which are present in the respective detection zone. However, it is also possible that all this is graphically indicated, with, for instance, the individual shelves being shown on the display, which shelves are divided into detection zones with, for instance, colors and while, per detection zone, a list with names of articles is indicated.

So, it holds in this example that the control device 22 is provided with a memory in which it is monitored which identification labels 34.y have been detected in which detection zones 6.i. Thus, the control device 22 controls the label detection system such that, per detection zone, the labels present in the respective detection zone are detected and registered. It further holds that each label comprises an identification code, while, per identification code, the control device 22 comprises information about the article to which the respective label is attached.

In this example, it further holds that the shelf system according to the invention is provided with a collection of identification labels 34.y, while the control device 22 is provided with information about the collection of identification labels. In this example, this information about the collection consists of the identification codes of all issued labels. In this example, it further holds that, on the basis of the information about the collection, the control device can determine which labels have not been detected as being present in the detection zones scanned. In this manner, it can be determined which labels and/or articles are missing. The control device 22 further comprises information about in which detection zone 6.i a label and/or article is to be stored when the respective label and/or article is present. In this manner, in this example, the control device 22 can also determine in which zone 6.i which labels and/or articles are missing. The control device can register the latter, for instance in its memory, and/or output this to, for instance, the display 24. On the display 24, then, for instance, next to a list with articles present, a list with articles absent can also be shown. Also, the control device 22 can determine that an article is, for instance, located in a wrong detection zone. This can also be shown on the display 24.

In this example, the detection zones 6.1-6.4 are continuously successively scanned with the aid of the multiplexer 16.

The shelf system of Fig. 1 is, for instance, designed as a shelf system for libraries. When a customer wishes to borrow a book, he can identify himself at the card reader 26 by having his identification card read out. Thus, the control device 22 knows the identity of the customer (person/company or organization) who wishes to take an article from the cabinet 2 designed as a bookcase. This customer may, for instance, remove the article 32.3. So, during scanning, it is determined that the article 32.3 has been removed from the detection zone 6.1. In this example, this means, on the one hand, that the article 32.3 is no longer indicated as being present on the display 24 but as being absent instead. Further, in a memory of the control device 22, it is registered that the article 32.3 has been taken away by the identified customer. It is possible that the system is further provided with an antitheft function. The article 32.3 can be released in order to be taken away, for instance by making knowable to the system that the article 32.3 has been allocated to the customer and no alarm needs to be generated if the article 32.3 leaves, in this example, the library or, for instance, by deactivating an antitheft bit of the identification label 34.3 of the article 32.3.

When a customer puts back an article in the system for libraries, he does not need to identify (again). This is because, when the article 32.3 is put back again, for instance in detection zone 6.2, the system will detect this article and know that this article has been put back by the respective customer. It is then possible that the article 32.3 is marked as not released for being taken away, for instance by making knowable to the system that the article 32.3 has not been allocated to the customer and an alarm needs to be generated if the article 32.3 leaves, in this example, the library or by deactivating an antitheft bit of the identification label 34.3 of the article 32.3. This is because the article was registered as being lent out to the respective customer. In this example, it further holds that, when the respective customer puts back the respective article in the detection zone 6.2, the label detection system will detect the respective article and will determine that the article has not been placed back in the desired zone, in this example being detection zone 6.1. In order to correct his, the control device 22 will inform the respective customer, for instance via the voice system 28 and/or via the display 24, that he has placed the article in the wrong section and will ask him to place it in the detection zone 6.1.

It is also possible that the shelf system is provided with a return shelf on which a customer puts back an article, for instance in the system for libraries. When the article is put back in a detection zone of the return shelf, the system will detect this article and know that this article was put back by the respective customer. In this case, it need not be required that the customer puts back the article in a predetermined detection zone of the return shelf. In a special embodiment, the return shelf and, if applicable, a cabinet in which the return shelf is included is, at least partly, accessible from two sides, for instance a front side and a back side. This makes it possible that the article is placed back in the return shelf, for instance via the front side (for instance in case of a book or videotape with the back to a back side of the return shelf), and can be taken out directly via, for instance, the back side, if the customer, or another customer, wishes to take the article away.

The shelf system of Fig. 1 may, for instance, also be designed as a shelf system for pharmacies. When a customer wishes to buy a medicine, an employee of the pharmacy will take a package with the respective medicine from the shelf. The shelf system will detect that the respective package is removed from the detection zone. Information with respect to the package and/or the medicine may, for instance, be passed on to a cash register system for having the customer pay for the medicine or, for instance, to an (electronic) file of the customer for storing data with respect to medicine use by the respective customer. The shelf system can also detect whether packages of the respective medicine are still present in the detection zone. Information with respect to the presence or absence of the respective medicine may, for instance, be fed to an (electronic) stock control system.

In this example, the employee of the pharmacy can identify himself by having his identification card read out by the card reader 26. Thus, the control device 22 knows the identity of the employee who wishes to take an article from the cabinet 2. This employee may, for instance, remove the article 32.3. So, during scanning, it is determined that the article 32.3 has been removed from the detection zone 6.1. This for instance means that, on the one hand, the article 32.3 is no longer indicated as being present on the display 24, but is indicated as being absent instead. Further, in a memory of the control device 22, it is registered that the article 32.3 has been removed by the identified employee. This information may, for instance, be used for the operational management of the pharmacy.

When an employee places an article for instance supplied by a supplier in the shelf system, then the system will detect this article and pass on to, for instance, a stock control system that the respective article has been placed in the shelf. In this example, it also holds that, when the respective employee puts the article back in the detection zone 6.2, the system will detect the respective article and will determine that the article has not been placed in the desired detection zone, in this example being detection zone 6.1. In order to correct this, the control device 22 will inform the respective employee, for instance via the voice system 28 and/or via the display 24, that he has placed the article in the wrong section and will ask him to place it in the detection zone 6.1.

The shelf system of Fig. 1 may, for instance, also be designed as a shelf system for shops. When, for instance, a customer wishes to buy an article, he can identify himself at the card reader 26 by having his identification card read out. Thus, the control device 22 knows the identity of the customer (person/company or organization) who wishes to take an article from the cabinet 2. This customer may, for instance, remove the article 32.3. So, during scanning, it is determined that the article 32.3 has been removed from the detection zone 6.1. It will be clear that, in this example, the display 24 not necessarily needs to be present near the cabinet to indicate whether an article is present or absent. Further, in a memory of the control device 22, it is registered that the article 32.3 has been taken from the shelf by the identified customer. Information with respect to the article (or articles) taken from the shelf by the customer may then be fed to a cash register system, so that the customer can pay for the article (or articles) taken from the shelf before leaving the shop.

The shelf system of Fig. 1 may, for instance, also be designed as a shelf system for warehouses. When a customer wishes to buy an article, an employee of the warehouse will take the respective article from the shelf. The label detection system will detect that the respective package is removed from the detection zone. In this example, the employee of the warehouse can identify the customer, for instance for order picking, by having an identification card associated with the customer read out at the card reader 26 or, for instance, by having a barcode associated with the customer scanned or by entering a customer code associated with the customer on a keyboard. The control device 22 thus knows the identity of the customer to whom an article from the cabinet 2 will be delivered. The employee may, for instance, remove the article 32.3. So, during scanning, it is determined that the article 32.3 has been removed from the detection zone 6.1. Further, in a memory of the control device 22, it is registered that the article 32.3 has been removed and will be delivered to the identified customer.

More in general, it therefore holds that the control device is further provided with input means for inputting identity information of, for instance, a person, organization or company, while the control device is arranged for, after identity information has been input, coupling information about a label or article which is put in a shelf or taken from the shelf with the identity information and storing information of the intercoupled identity information and information about the article or label.

The invention is by no means limited to the above-described embodiments.

In the example, a screening of a detection zone is realized by providing the upstanding wall 10 which is integrated in the respective antenna module with a material which absorbs and/or reflects electromagnetic radiation. However, other manners of screening are also possible. It is also possible that no screening takes place, while the antennas are arranged and configured such that mutually different detection zones are realized without screening.

In the example, each shelf is provided with one transmitting and receiving antenna for generating one detection zone. It will be clear that it is possible, for instance with a very long shelf (for instance more than three meters), that the shelf is provided with at least two transmitting and receiving antennas placed next to one another. Thus, for instance, the required power of the transmitting and receiving apparatus can be limited.

The use of a multiplexer has the advantage that, with the aid of one transmitting and receiving apparatus 20, each of the detection zones can be scanned. Of course, it is also possible that each detection zone is provided with its own transmitting and receiving apparatus 20 so that the multiplexer 16 can be omitted. Each of those transmitting and receiving apparatuses 20 may then, for instance, be connected with the control device 22. Then, an advantage is that all detection zones can be read out separately.

Of course, also, the system of Fig. 1 may also be extended to include more than one cabinet. The components included within the shading 36 in Fig. 1 may then be designed in multiples as shown in Fig. 3. In effect, this means that, per cabinet, use is made of a multiplexer 16, a transmitting and receiving apparatus 20, a display 24, a card reader 26, an input system 28 and at least one transmitting and receiving antenna 5.i. This collection 36 of components is then connected with a common control device 22 as shown in Fig. 3. In Fig. 3, three cabinets and therefore three collections 36.1-36.3 are involved. Of course, it is also possible that all detection zones of all cabinets are scanned with the aid of a transmitting and receiving apparatus and one multiplexer 16. However, once scanning all detection zones will then generally take up somewhat more time.

The shelf system as shown in Fig. 3 may, for instance, but not exclusively, be designed as a shelf system for libraries, a shelf system for pharmacies, a shelf system for shops or a shelf system for warehouses.

In this example, identification labels contain an identification code while, in the control device, per identification code, information is included about the respective article to which the label is attached. However, it is also possible that the label itself is provided with information about the respective article. In that case, upon reading out a label, relevant information about the respective article is known directly.

It will be clear that the shelf system according to the invention has many applications. Thus, it may be detected and/or indicated on, for instance, a display whether there are articles on a shelf and/or in a detection zone which do not belong there. Also, in this manner, very quickly, stock can be taken of which articles are present in which location and which articles are missing. Also, the cabinets may have a mobile design so that they can be driven to a right location. As said, the system may also be used for distributing articles in a simple manner and placing articles (back) in a simple manner, or, for instance, for sorting articles in a simple manner. Also, when a set of new articles is placed, these articles can simply be placed in the cabinets. The system then directly recognizes the new identification labels and when the identification codes of the respective labels have already been coupled to information about the respective articles, then it can be determined directly which new articles have been placed in the cabinets and optionally on which shelves or in which detection zones. The information of an article associated with an identification code may, for instance, be send along by a supplier of the articles and be read at the input unit 22 in a manner known per se. It is also possible that this information is automatically retrieved from, for instance, a supplier, for instance via the Internet, when the system reads out an identification code in a cabinet which is not known to the system. The system may then automatically retrieve information about the respective article so that it is still known to the system which article is located where.

The term cabinet should be understood in a broad sense. At least one shelf fixed on a wall may also be understood to mean a cabinet. A box comprising a number of shelves in which articles are stored is also covered by the term cabinet. Such variants are each understood to fall within the framework of the invention.

## Claims

1. A shelf system provided with at least one shelf which is arranged for accommodating articles such as books, packages, for instance with medicines, and/or videotapes, wherein the system is further provided with at least one label detection system provided with an antenna system provided with coils for reading out identification labels which are operatively connected with the articles, wherein the antenna system is provided with at least one transmitting and receiving antenna for transmitting an electromagnetic interrogation field and receiving responses from the identification labels present in the interrogation field, **characterised in that** the at least one transmitting and receiving antenna is provided with a plurality of coils, which are electrically conductively interconnected by means of connecting wires, which coils are located on or above the shelf and which are provided at least substantially in a plurality of surfaces, wherein each surface has a normal which is at least virtually directed in a longitudinal direction of the shelf and wherein the surfaces are provided so as to be offset relative to one another in the longitudinal direction of the shelf.

2. A shelf system according to claim 1, **characterized in that**, the antenna system is provided with at most one transmitting and receiving antenna per shelf.

3. A shelf system according to claim 1 or 2, **characterized in that** the plurality of coils of the transmitting and receiving antenna is provided in at least three surfaces offset in the longitudinal direction of the shelf and relative to one another.

4. A shelf system according to any one of the preceding claims, **characterized in that**, per surface, the transmitting and receiving antenna is provided with one coil.

5. A shelf system according to claim 1, wherein the connecting wires extend between the surfaces substantially in the longitudinal direction of the shelf.

6. A shelf system according to claim 1 or 5, wherein the connecting wires extend next to, for instance behind, the shelf.

7. A shelf system according to any one of the preceding claims, **characterized in that** the shelf system further comprises at least one article provided with at least one identification label, wherein the identification label is positioned substantially parallel to the coils of the at least one transmitting and receiving antenna.

8. A shelf system according to any one of the preceding claims, **characterized in that** a detection zone in which the transmitting and receiving antenna transmits the interrogation field coincides with the at least one shelf.

9. A shelf system according to any one of the preceding claims, **characterized in that** the shelf system is provided with at least one cabinet which comprises a plurality of the shelves.

10. A shelf system according to claim 6 and 9, **characterized in that** the connecting wires extend, at least partly, behind the cabinet.

11. A shelf system according to any one of the preceding claims, **characterized in that** the coils are connected with the shelf, and/or according to claim 9, **characterized in that** the coils are connected with the cabinet.

12. A shelf system according to any one of the preceding claims, **characterized in that** at least one shelf is, at least partly, accessible from at least two sides, such as a front side and a back side, and/or according to claim 9, **characterized in that** at least one cabinet is, at least partly, accessible from at least two sides, such as a front side and a back side.

13. A shelf system according to claim 9, **characterized in that** the shelf system is provided with a plurality of cabinets.

14. A shelf system according to any one of the preceding claims, **characterized in that** the label detection system is provided with at least one transmitting and receiving apparatus and a plurality of the transmitting and receiving antennas, wherein the label detection system is further provided with at least one multiplexer for successively connecting different transmitting and receiving antennas with the at least one transmitting and receiving apparatus for successively, for a plurality of detection zones, per detection zone, detecting identification labels present in the respective zone.

15. A shelf system according to claim 14, **characterized in that** the at least one transmitting and receiving apparatus is provided with a transmitter and a receiver, wherein the transmitter and/or receiver is successively connected with different transmitting and receiving antennas via the multiplexer.

16. A shelf system according to any one of the preceding claims, **characterized in that** the shelf system is further provided with a control device which is connected with the label detection system.

17. A shelf system according to claim 16, **characterized in that**, per identification label, the control device comprises information about an article to which that identification label is attached and is optionally arranged for outputting and/or for registering in which zone which articles are present and/or are missing.

18. A shelf system according to claim 17, **characterized in that** the control device is provided with at least one information output unit such as a display for operatively outputting information about the articles present and/or missing in the at least one detection zone.

19. A shelf system according to any one of claims 16-18, **characterized in that** the control device is further provided with input means for inputting identity information of, for instance, a person, organization or company, wherein the control device is arranged for, after identity information has been inputted, coupling information about a label or article which is taken from the shelf or put in the shelf to the identity information and storing coupling information of the intercoupled identity information and information about the article or label.

20. A shelf system according to any one of claims 16-19, **characterized in that** the control device is provided with information about a desired arrangement of the articles in the shelves, wherein the control device is further provided with means for making knowable when an article is placed in an undesired detection zone.

21. A shelf system according to any one of the preceding claims, **characterized in that** the at least one coil of the transmitting and receiving antenna extending in a surface is designed as an insert module which is arranged for being placed in a shelf.

22. A shelf system according to any one of the preceding claims, **characterized in that** the transmitting and receiving antenna is integrated in the shelf, and/or according to at least claim 9, **characterized in that** the at least one transmitting and receiving antenna is integrated in the cabinet.

23. A shelf system according to at least claim 9, **characterized in that** the cabinet is designed as a bookcase.

24. A shelf system according to any one of the preceding claims, **characterized in that** the system is arranged as a shelf system for libraries.

25. A shelf system according to any one of the preceding claims, with the exception of claim 24.

26. A label detection system arranged for being used in a shelf system according to any one of the preceding claims.

## Patentansprüche

1. Regalsystem, das mit mindestens einem Regal versehen ist und zur Aufnahme von Gegenständen wie z. B. Büchern, Verpackungen, beispielsweise mit Medikamenten, und/oder Videobändern eingerichtet ist, wobei das System ferner mit mindestens einem Etikettenerkennungssystem ausgestattet ist, welches mit einem Antennensystem mit Spulen zum Auslesen der Identifikationsetiketten, die funktionell mit den Gegenständen verbunden sind, ausgestattet ist, wobei das Antennensystem mindestens mit einer Sende- und Empfangsantenne zum Senden eines elektromagnetischen Abfragefelds und Empfangen von Antworten von den im Abfragefeld vorhandenen Identifikationsetiketten ausgestattet ist, **dadurch gekennzeichnet, dass** die mindestens eine Sende- und Empfangsantenne mit einer Vielzahl von Spulen versehen ist, die elektrisch leitend mittels Verbindungsdrähten miteinander verbunden sind, wobei sich die Spulen auf oder oberhalb des Regals befinden und mindestens im Wesentlichen in einer Vielzahl von Oberflächen vorgesehen sind, wobei jede Oberfläche eine Normale aufweist, die mindestens virtuell in Längsrichtung des Regals verläuft, und wobei die Oberflächen so vorgesehen sind, dass sie im Verhältnis zueinander in Längsrichtung des Regals versetzt sind.

2. Regalsystem nach Anspruch 1, **dadurch gekennzeichnet, dass** das Antennensystem mit mindestens einer Sende- und Empfangsantenne pro Regal versehen ist.

3. Regalsystem nach Anspruch 1 oder 2, **dadurch gekennzeichnet, dass** die Vielzahl der Spulen der Sende- und Empfangsantenne in mindestens drei Oberflächen vorgesehen ist, die in Längsrichtung des Regals und im Verhältnis zueinander versetzt sind.

4. Regalsystem nach einem der vorangehenden Ansprüche, **dadurch gekennzeichnet, dass** pro Oberfläche die Sende- und Empfangsantenne mit einer Spule versehen ist.

5. Regalsystem nach Anspruch 1, wobei sich die Verbindungsdrähte zwischen den Oberflächen im Wesentlichen in der Längsrichtung des Regals erstrecken.

6. Regalsystem nach Anspruch 1 oder 5, wobei sich die Verbindungsdrähte dicht bei, zum Beispiel hinter dem Regal erstrecken.

7. Regalsystem nach einem der vorangehenden Ansprüche, **dadurch gekennzeichnet, dass** das Regalsystem ferner mindestens einen Gegenstand umfasst, der mit mindestens einem Identifikationsetikett versehen ist, wobei das Identifikationsetikett im Wesentlichen parallel zu den Spulen mindestens einer Sende- und Empfangsantenne positioniert ist.

8. Regalsystem nach einem der vorangehenden Ansprüche, **dadurch gekennzeichnet, dass** ein Erkennungsbereich, in dem die Sende- und Empfangsantenne das Abfragefeld sendet, mit mindestens einem Regal übereinstimmt.

9. Regalsystem nach einem der vorangehenden Ansprüche, **dadurch gekennzeichnet, dass** das Regalsystem mit mindestens einem Schrank versehen ist, der eine Vielzahl von Regale umfasst.

10. Regalsystem nach Anspruch 6 und 9, **dadurch gekennzeichnet, dass** sich die Verbindungsdrähte zumindest teilweise hinter dem Schrank erstrecken.

11. Regalsystem nach einem der vorangehenden Ansprüche, **dadurch gekennzeichnet, dass** die Spulen mit dem Regal verbunden sind, und/oder nach Anspruch 9 **dadurch gekennzeichnet, dass** die Spulen mit dem Schrank verbunden sind.

12. Regalsystem nach einem der vorangehenden Ansprüche, **dadurch gekennzeichnet, dass** mindestens ein Regal zumindest teilweise von mindestens zwei Seiten zugänglich ist, zum Beispiel von einer Vorderseite und einer Rückseite, und/oder nach Anspruch 9 **dadurch gekennzeichnet, dass** mindestens ein Schrank zumindest teilweise von mindestens zwei Seiten zugänglich ist, zum Beispiel von einer Vorderseite und einer Rückseite.

13. Regalsystem nach Anspruch 9, **dadurch gekennzeichnet, dass** das Regalsystem mit einer Vielzahl von Schränken versehen ist.

14. Regalsystem nach einem der vorangehenden Ansprüche, **dadurch gekennzeichnet, dass** das Etikettenerkennungssystem mit mindestens einer Sende- und Empfangseinrichtung und einer Vielzahl von Sende- und Empfangsantennen versehen ist, wobei das Etikettenerkennungssystem ferner mit mindestens einem Multiplexer versehen ist, um verschiedene Sende- und Empfangsantennen nacheinander mit mindestens der einen Sende- und Empfangseinrichtung zu verbinden, um nacheinander, für eine Vielzahl von Erkennungsbereichen, pro Erkennungsbereich die im entsprechenden Bereich vorhandenen Identifikationsetiketten zu erkennen.

15. Regalsystem nach Anspruch 14, **dadurch gekennzeichnet, dass** mindestens eine Sende- und Empfangseinrichtung mit einem Sender und einem Empfänger versehen ist, wobei der Sender und/oder Empfänger über den Multiplexer nacheinander mit verschiedenen Sende- und Empfangsantennen verbunden wird.

16. Regalsystem nach einem der vorangehenden Ansprüche, **dadurch gekennzeichnet, dass** das Regalsystem ferner mit einem Steuergerät versehen ist, das mit dem Etikettenerkennungssystem verbunden ist.

17. Regalsystem nach Anspruch 16, **dadurch gekennzeichnet, dass** das Steuergerät über das Identifikationsetikett Informationen über einen Gegenstand umfasst, an dem dieses Identifikationsetikett angebracht und optional für die Ausgabe und/oder das Registrieren dessen angeordnet ist, in welchem Bereich welche Gegenstände vorhanden sind und/oder fehlen.

18. Regalsystem nach Anspruch 17, **dadurch gekennzeichnet, dass** das Steuergerät mit mindestens einer Informationsausgabeeinheit versehen ist, wie z. B. ein Display zur funktionellen Ausgabe von Informationen über die vorhandenen und/oder fehlenden Gegenstände in mindestens einem Erkenn ungsbereich.

19. Regalsystem nach einem der Ansprüche 16 bis 18, **dadurch gekennzeichnet, dass** das Steuergerät ferner mit Eingabemitteln zum Eingeben der Identitätsinformationen zum Beispiel einer Person, Organisation oder eines Unternehmens versehen ist, wobei das Steuergerät dafür angeordnet ist, nach dem Eingeben der Identitätsinformationen die Informationen über ein Etikett oder den Gegenstand, der aus dem Regal entnommen wurde oder in das Regal gelegt wurde, mit den Identitätsinformationen zu verbinden und die gekoppelten Informationen der miteinander verbundenen Identitätsinformationen und Informationen über den Gegenstand oder das Etikett zu speichern.

20. Regalsystem nach einem der Ansprüche 16 bis 19, **dadurch gekennzeichnet, dass** das Steuergerät mit Informationen über eine gewünschte Anordnung der Gegenstände in den Regalen versehen ist, wobei das Steuergerät ferner mit Einrichtungen versehen ist, um kenntlich zu machen, wenn ein Gegenstand in einem unerwünschten Erkennungsbereich platziert wurde.

21. Regalsystem nach einem der vorangehenden Ansprüche, **dadurch gekennzeichnet, dass** mindestens eine Spule der Sende- und Empfangsantenne, die sich in einer Oberfläche erstreckt, als Einsteckmodul ausgelegt ist, das so ausgeführt ist, dass es in einem Regal platziert wird.

22. Regalsystem nach einem der vorangehenden Ansprüche, **dadurch gekennzeichnet, dass** die Sende- und Empfangsantenne im Regal integriert ist, und/oder nach mindestens Anspruch 9 **dadurch gekennzeichnet, dass** mindestens eine Sende- und Empfangsantenne im Schrank integriert ist.

23. Regalsystem mindestens nach Anspruch 9, **dadurch gekennzeichnet, dass** der Schrank als Bücherschrank ausgelegt ist.

24. Regalsystem nach einem der vorangehenden Ansprüche, **dadurch gekennzeichnet, dass** das System als Regalsystem für Bibliotheken angeordnet ist.

25. Regalsystem nach einem der vorangehenden Ansprüche, mit Ausnahme von Anspruch 24.

26. Etikettenerkennungssystem, das zum Verwenden in einem Regalsystem nach einem der vorangehenden Ansprüche angeordnet ist.

## Revendications

1. Système d'étagère, muni d'au moins une étagère, qui est agencée pour loger des articles tels que des livres, des emballages, par exemple avec des médicaments et / ou des bandes vidéo, dans lequel le système est muni en outre d'au moins un système de détection d'étiquette, muni d'un système d'antenne, muni de bobines, destinées à lire des étiquettes d'identification qui sont reliées de manière opérationnelle aux articles, dans lequel le système d'antenne est muni d'au moins une antenne d'émission et de réception, destinée à émettre un champ d'interrogation électromagnétique et à recevoir des réponses de la part des étiquettes d'identification, présentes dans le champ d'interrogation,
**caractérisé en ce que**
la au moins une antenne d'émission et de réception est munie d'une pluralité de bobines, qui sont interconnectées de manière électriquement conductrice au moyen de fils de connexion, lesquelles bobines sont situées sur ou au-dessus de l'étagère et qui sont prévues au moins sensiblement dans une pluralité de surfaces, dans lequel chaque surface a une perpendiculaire qui est au moins virtuellement dirigée dans une direction longitudinale de l'étagère et dans lequel les surfaces sont prévues de façon à être décalées les unes par rapport aux autres dans la direction longitudinale de l'étagère.

2. Système d'étagère selon la revendication 1,
**caractérisé en ce que**
le système d'antenne est muni d'au plus une antenne d'émission et de réception par étagère.

3. Système d'étagère selon la revendication 1 ou 2,
**caractérisé en ce que**
la pluralité de bobines de l'antenne d'émission et de réception est prévue dans au moins trois surfaces, décalées dans la direction longitudinale de l'étagère et les unes par rapport aux autres.

4. Système d'étagère selon l'une quelconque des revendications précédentes,
**caractérisé en ce que**
l'antenne d'émission et de réception est munie d'une bobine par surface.

5. Système d'étagère selon la revendication 1, dans lequel les fils de connexion s'étendent entre les surfaces, sensiblement dans la direction longitudinale de l'étagère.

6. Système d'étagère selon la revendication 1 ou 5, dans lequel les fils de connexion s'étendent près de, par exemple derrière, l'étagère.

7. Système d'étagère selon l'une quelconque des revendications précédentes,
**caractérisé en ce que**
le système d'étagère comprend en outre au moins un article, muni d'au moins une étiquette d'identification, dans lequel l'étiquette d'identification est positionnée sensiblement parallèlement aux bobines de la au moins une antenne d'émission et de réception.

8. Système d'étagère selon l'une quelconque des revendications précédentes,
**caractérisé en ce**
**qu'**une zone de détection, dans laquelle l'antenne d'émission et de réception émet le champ d'interrogation, coïncide avec la au moins une étagère.

9. Système d'étagère selon l'une quelconque des revendications précédentes,
**caractérisé en ce que**
le système d'étagère est muni d'au moins une armoire, qui comprend une pluralité d'étagères.

10. Système d'étagère selon les revendications 6 et 9,
**caractérisé en ce que**
les fils de connexion s'étendent, au moins partiellement, derrière l'armoire.

11. Système d'étagère selon l'une quelconque des revendications précédentes,
**caractérisé en ce que**
les bobines sont reliées à l'étagère et / ou selon la revendication 9
**caractérisé en ce que**
les bobines sont reliées à l'armoire.

12. Système d'étagère selon l'une quelconque des revendications précédentes,
**caractérisé en ce que**
au moins une étagère est, au moins partiellement, accessible depuis au moins deux côtés, tel qu'un côté avant et un côté arrière et / ou selon la revendication 9,
**caractérisé en ce que**
au moins une armoire est, au moins partiellement, accessible depuis au moins deux côtés, tels qu'un côté avant et un côté arrière.

13. Système d'étagère selon la revendication 9,
**caractérisé en ce que**
le système d'étagère est muni d'une pluralité d'armoires.

14. Système d'étagère selon l'une quelconque des revendications précédentes,
**caractérisé en ce que**
le système de détection d'étiquette est muni d'au moins un appareil d'émission et de réception et d'une pluralité d'antennes d'émission et de réception, dans lequel le système de détection d'étiquette est muni en outre d'au moins un multiplexeur, destiné à relier successivement différentes antennes d'émission et de réception au au moins un appareil d'émission et de réception, destiné à détecter successivement, pour une pluralité de zones de détection, par zone de détection, les étiquettes d'identification, présentes dans la zone respective.

15. Système d'étagère selon la revendication 14,
**caractérisé en ce que**
le au moins un appareil d'émission et de réception est muni d'un émetteur et d'un récepteur, dans lequel l'émetteur et / ou le récepteur est relié successivement à différentes antennes d'émission et de réception par l'intermédiaire du multiplexeur.

16. Système d'étagère selon l'une quelconque des revendications précédentes,
**caractérisé en ce que**
le système d'étagère est muni en outre d'un dispositif de commande, qui est relié au système de détection d'étiquette.

17. Système d'étagère selon la revendication 16,
**caractérisé en ce que**
par étiquette d'identification, le dispositif de commande comprend des informations sur un article auquel est fixée l'étiquette d'identification et est agencé en option pour produire et / ou pour enregistrer dans quelle zone quels articles sont présents et / ou sont manquants.

18. Système d'étagère selon la revendication 17,
**caractérisé en ce que**
le dispositif de commande est muni d'au moins une unité de sortie d'information, telle qu'un écran, destiné à produire des informations de manière opérationnelle sur les articles, présents et / ou manquants dans la au moins une zone de détection.

19. Système d'étagère selon l'une quelconque des revendications 16 à 18,
**caractérisé en ce que**
le dispositif de commande est muni en outre de moyens d'entrée, destinés à entrer des informations d'identité de, par exemple, une personne, un organisme ou une société, dans lequel le dispositif de commande est agencé pour, après que les informations d'identité ont été entrées, coupler les informations sur une étiquette ou un article, qui a été pris sur l'étagère ou mis sur l'étagère, aux informations d'identité et pour stocker les informations de couplage des informations d'identité intercouplées et des informations sur l'article ou l'étiquette.

20. Système d'étagère selon l'une quelconque des revendications 16 à 19,
**caractérisé en ce que**
le dispositif de commande est muni d'informations sur un agencement désiré des articles sur les étagères, dans lequel le dispositif de commande est muni en outre de moyens, destinés à faire savoir quand un article est placé dans une zone de détection non désirée.

21. Système d'étagère selon l'une quelconque des revendications précédentes,
**caractérisé en ce que**
la au moins une bobine de l'antenne d'émission et de réception, qui s'étend sur une surface, est conçue comme un module d'insertion, qui est agencé pour être placé sur une étagère.

22. Système d'étagère selon l'une quelconque des revendications précédentes,
**caractérisé en ce que**
l'antenne d'émission et de réception est intégrée sur l'étagère et / ou selon au moins la revendication 9,
**caractérisé en ce que**
la au moins une antenne d'émission et de réception est intégrée dans l'armoire.

23. Système d'étagère selon au moins la revendication 9,
**caractérisé en ce que**
l'armoire et conçue comme une bibliothèque.

24. Système d'étagère selon l'une quelconque des revendications précédentes,
**caractérisé en ce que**
le système est agencé comme un système d'étagères pour bibliothèques.

25. Système d'étagère selon l'une quelconque des revendications précédentes, à l'exception de la revendication 24.

26. Système de détection d'étiquette, agencé pour être utilisé dans un système d'étagère selon l'une quelconque des revendications précédentes.
